# EUROPEAN PATENT APPLICATION

(11) **EP 1 069 155 A1**
(43) Date of publication of application: **17.01.2001**
(21) Application number: 00114193.6
(22) Date of filing: 13.07.2000
(51) Int. Cl.: C08K 5/15, C08K 5/134, C08L 69/00, C08L 67/02, C08G 18/08, C08L 75/04

(54) **Heat stabilizing method of thermoplastic resin**

(30) Priority: 16.07.1999 JP 20288999
(71) Applicant: TOHOKU MUNEKATA Co., Ltd., Fukushima-shi, Fukushima-Ken (JP)
(72) Inventor: Nikkeshi, Susumu, Kurokawa-gun, Miyagi-ken (JP); Kanno, Maki, Fukushima-shi, Fukushima-ken (JP)
(74) Representative: Albrecht, Thomas, Dr.

(57) **Abstract**

Provided is a method for thermally stabilizing a thermoplastic resin by adding 10 to 3000 ppm of tannin to the thermoplastic resin to inhibit the thermoplastic resin from being reduced in a molecular weight in heating and melting.

## Description

### Detailed Description of the Invention

### Field of Industrial Application

In general, polycarbonate (PC), polybutylene terephthalate (PBT), polyethylene terephthalate (PET), blends thereof and thermoplastic resins obtained by blending one or a plurality of these resins with other resins cause heat decomposition when heated and molten in various molding processes and are reduced in a molecular weight, which results in a reduction in the mechanical properties. The present invention relates to a heat stabilizing method of a thermoplastic resin for preventing heat decomposition in such case.

### Problems to be Solved by the Invention

Resin materials, particularly the respective resins of PC, PBT and PET are heavily reduced in a molecular weight in heating and melting and therefore have notably been reduced in a molecular weight by virtue of heat given in the respective molding processes and a shearing stress in kneading. Accordingly, it has been difficult to recycle sprues and runners produced in molding as well as recycling of the products. An object of the present invention is to provide a heat stabilizing method of a thermoplastic resin which inhibits the preceding reduction in a molecular weight of resin materials in heating and melting by adding a trace amount of tannin and which turns them into recyclable materials.

### Means for Solving the Problems

The object of the present invention described above can be achieved by a heat stabilizing method of a thermoplastic resin characterized by adding 10 to 3000 ppm of tannin to the thermoplastic resin. The present invention shall be explained below in further details.

Intensive researches of an influence exerted on materials by tannin continued by the present inventors have resulted in finding that a thermoplastic resin can be inhibited from being reduced in a molecular weight in heating and melting by adding a trace amount of tannin and thus, they have completed the present invention.

The tannin used in the present invention is a general term of complicated aromatic compounds having a lot of phenolic hydroxyl groups which are widely distributed in the plant kingdom, and to be roughly divided, it is divided into two kinds of a hydrolyzed type and a condensed type. Either of them is a natural compound, and therefore a lot of the compounds having different structures are present. Either tannin may be used in the present invention.

Polyhydric phenol compounds having a dye-fixing effect and a tanning effect of leather are called "synthetic tannin" and "cintan", and among the synthetic tannins, the compounds which are effectively used can be used as well in the present invention.

Also, tannic acid is called tannin as well and shall not specifically be distinguished in the present invention.

China tannin which is a typical hydrolyzed type tannin is shown by Formula (1). To further describe the China tannin, it has been apparent that the China tannin has a structure in which 10 gallic acid groups are disposed in the circumference of a glucose residue and two gallic acid groups are bonded in a vertical direction [a * part in Formula (1)]. However, the center of the compound is not necessarily restricted to glucose and is the compound of a cellulose type in a certain case. Thus, tannins are compounds contained widely in plants in the natural world, and therefore it can readily be presumed that they are partially different in a chemical structure.

Tannins including decomposition products obtained by alkaline decomposition or hydrolytic decomposition of tannin are used as well in the present invention and, for example, didepside of gallic acid shown by Formula (2) which is obtained by hydrolysis of tannin can be used as well. At present, tannin is used for daily needs such as an ink, medical uses such as a hemostatic agent and industrial uses such as a tanning agent of leather and a mordant in dyeing, and in recent years, it is used as a food additive. Tannin is dissolved very well in water and lower alcohols and therefore can be used in the form of a solution having a high concentration.

Further, tannins including catechin are used as well in the present invention. Catechin is a polyhydroxy derivative of 3-hydroxyflavane which is a polyhydric phenol compound and contained widely in plants in the natural world. It is said that catechin includes heterogeneous types having various molecular structures, and any ones are natural compounds, so that a lot of catechins having different structures are present. Catechin used in the present invention shall not specifically be restricted and may be any one as long as it is catechin which can effectively be used for the object of the present invention. Also, catechin is also called shibu. At present, tannin is used for medical uses such as a carcinostatic agent and industrial uses such as a color fixing agent and a mordant for nylon. Catechin is dissolved very well in water and lower alcohols and therefore can be used in the form of a solution having a high concentration.

Tannin preferably used in the present invention includes China tannin and 3,5,7,3',4'-pentahydroxyflavane (catechin in terms of a narrow sense). Catechin (3), quebrotannin (4) and turkey tannin (5) are shown in Formula (3), Formula (4) and Formula (5) as various tannins having different chemical structures.

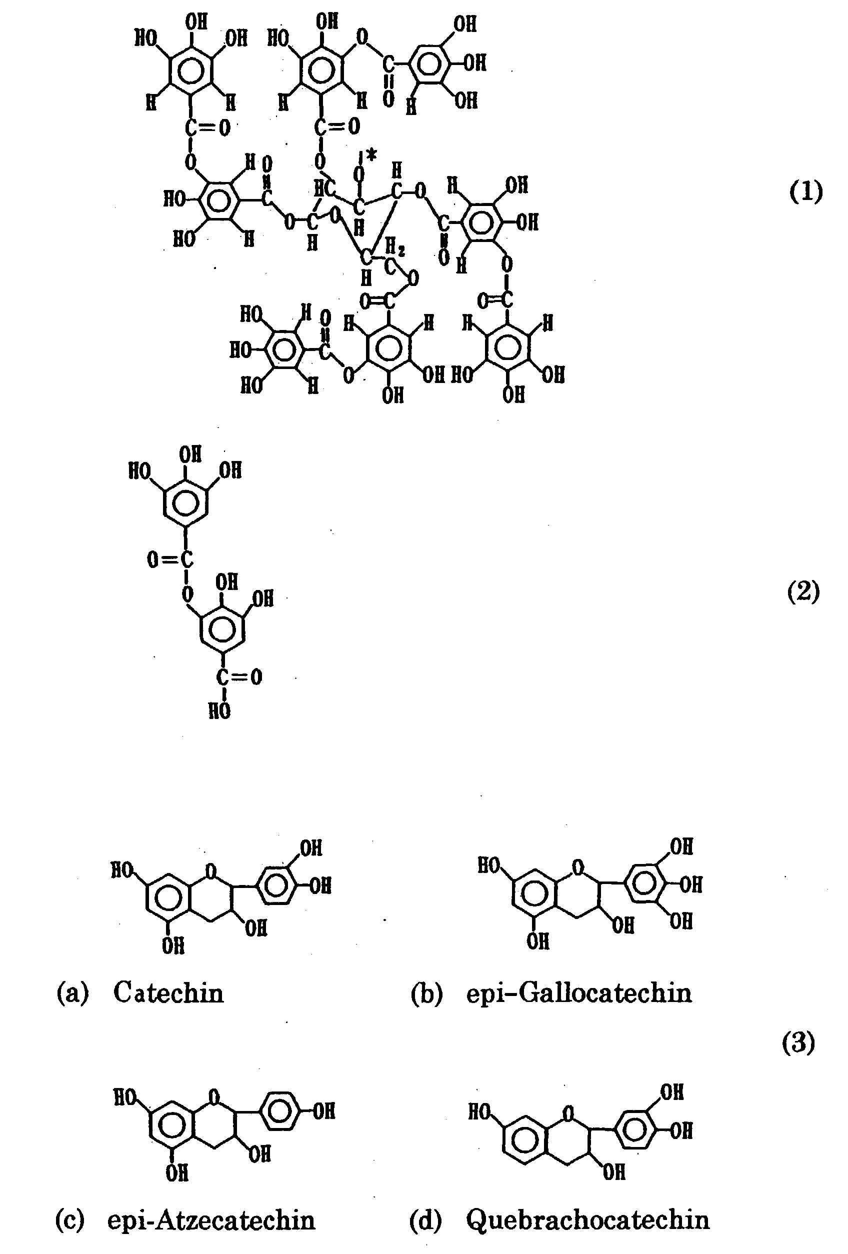

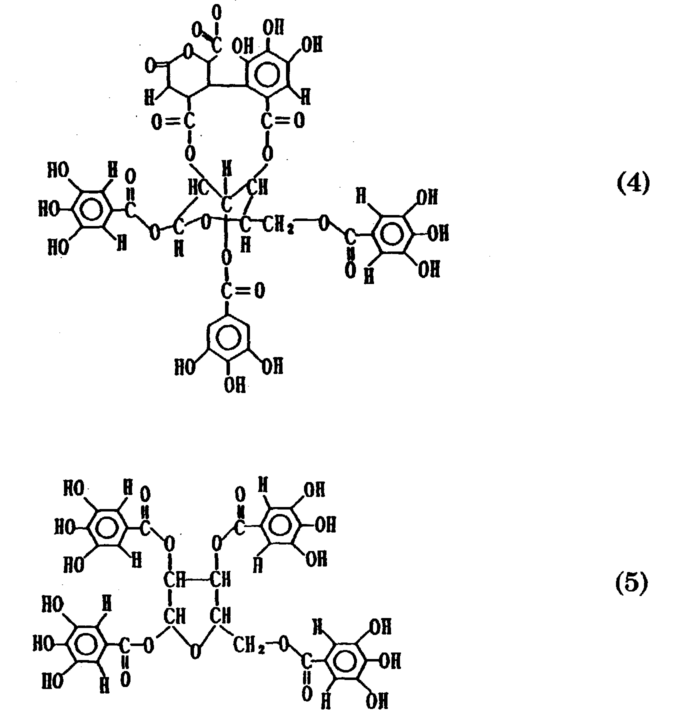

In the present invention, these tannins can be used alone or in a mixture of two or more kinds thereof.

Resins which are thermally stabilized by the method of the present invention shall not specifically be restricted, but polycarbonate resins (PC) or thermoplastic polyesters, particularly polyethylene terephthalate (PET) and polybutylene terephthalate (PBT) are suitable. Further, preferably used are blends of them and blend resins of one or a combination of a plural thereof and other resins, for example, blend resins such as PC/ABS, PBT/ABS, PC/PBT, PC/PET, PC/polystyrene and PC/PBT/polystyrene.

In the heat stabilizing method of a resin in the present invention, powdery tannin may be added directly to a resin or tannin may be dissolved in a solvent such as water and lower alcohol, and this solution may be added to a resin.

Tannin added to a thermoplastic resin in such a very small addition amount as 10 to 3000 ppm reveals the heat stabilizing effect of the resin. If tannin is added in an amount exceeding 3000 ppm, moisture produced by intermolecular dehydration condensation of tannin is increased to exert an adverse effect on the resin, and therefore it is not preferred. On the other hand, the amount of less than 10 ppm does not provide so much effect.

The thermoplastic resin thus obtained to which tannin is added is inhibited from a reduction in a molecular weight in heating and melting and makes it possible to recycle the molded article.

### Effects of the Invention

As shown in the following examples and comparative examples, it can be found that the addition of tannin according to the present invention inhibits the respective PC or polyester base resins from being reduced in a molecular weight in heating and melting. Accordingly, heat stabilization of a thermoplastic resin can be achieved by the heat stabilizing method of the present invention.

### Examples

The present invention shall be explained below in further details with reference to examples and comparative examples.

### Example 1

Weighed was 59.00 g of a PC resin (Panlite L-1250, Mn = 24700, Mw = 60800, Mw/Mn = 2.46, manufactured by Teijin Chemicals Co., Ltd.), and 11.8 mg of China tannin (extra pure reagent, manufactured by Koso Chemical Co., Ltd.) was further added thereto. This mixture was put into a plastometer (Lab Plastomill 50C 150 type manufactured by Toyo Seiki Mfg. Co., Ltd.) and kneaded at a temperature of 280°C and a revolution of 32 rpm. In this case, the addition amount of tannin to PC corresponds to 200 ppm. A sample of about 0.05 g for determining a molecular weight was taken by every 10 minutes during kneading.

The samples thus obtained were subjected to determination of a molecular weight by means of a gel permeation chromatography (hereinafter referred to as GPC, L7000 type manufactured by Hitachi, Ltd.), wherein a THF (tetrahydrofuran) solution of the sample having a concentration of about 0.05 wt % was allowed to flow at a pressure of 10 kg/cm² and a discharge amount of 0.5 ml/minute using THF as a carrier solvent and a detector RI. The results thereof are shown in Table 1. The virgin pellet of PC had an Mn of 24700.

### Comparative Example 1

The same procedure as in Example 1 was repeated, except that China tannin was not added. The results thereof are shown in Table 1 together.

### Example 2

The same procedure as in Example 1 was repeated, except that catechin (D-catechin manufactured by Nakarai Tesc Co., Ltd.) was substituted for China tannin. The results thereof are shown in Table 1 together.

### Example 3

The same procedure as in Example 1 was repeated to determine the molecular weight, except that China tannin was added so that the addition amount of China tannin became 10, 100, 1000 and 3000 ppm, respectively. The results thereof are shown in Table 2.

### Comparative Example 2

The same procedure as in Example 3 was repeated to determine the molecular weight, except the addition amount of China tannin was controlled so that the concentration became 5 and 4000 ppm. The results thereof are shown in Table 2 together.

### Example 4

China tannin used in Example 1 was added to a PBT resin (Duranex 3200 manufactured by Polyplastics Co., Ltd.), PET (Kurapet 1030 manufactured by Kuraray Co., Ltd.), a PC/ABS alloy (Ubelloy CX104 manufactured by Ube Cycon Co., Ltd.) and a PBT/ABS alloy (Novalloy B 1500 manufactured by Daicel Chemical Ind. Co., Ltd.) respectively so that the concentration was 200 ppm, and each 10 kg thereof was prepared. The whole amount thereof was put into an injection molding machine (IS- 170 type manufactured by Toshiba Machinery Co., Ltd.) and molded into a plate of 240 mm × 200 mm × 2.4 mm on the conditions of a nozzle temperature of 28 0°C, an injection pressure of 995 kgf/cm², a holding pressure of 595 kg/cm², an injection time of 1.61 seconds and a pressure-holding time of 21.4 seconds. This plate was crushed by means of a crusher (FNSK-15D manufactured by Nissui Kako Co., Ltd.). Taken out of the crushed resin was about 50 g of the sample for determining an MI, and all of the remainder was injection-molded four times on the same conditions. Melt flow (MI value) of the crushed sample obtained above was determined by means of a melt indexer (C-50 type manufactured by Toyo Seiki Mfg. Co., Ltd.) in terms of an MI value. In essence, deterioration of a resin has to be evaluated by a molecular weight, but the respective resins given above are not dissolved in THF used for determining a molecular weight, and therefore the molecular weights can not directly be measured. On the other hand, an MI value is correlative to a molecular weight, and therefore the evaluation was given in terms of the MI value. It is a matter of course that the lower the MI value is, the larger the molecular weight is and that an increase in the MI value shows a reduction in the molecular weight. The results thereof are shown in Table 3.

### Comparative Example 3

The same procedure as in Example 4 was repeated, except that China tannin was not added. The results thereof are shown in Table 3 together.

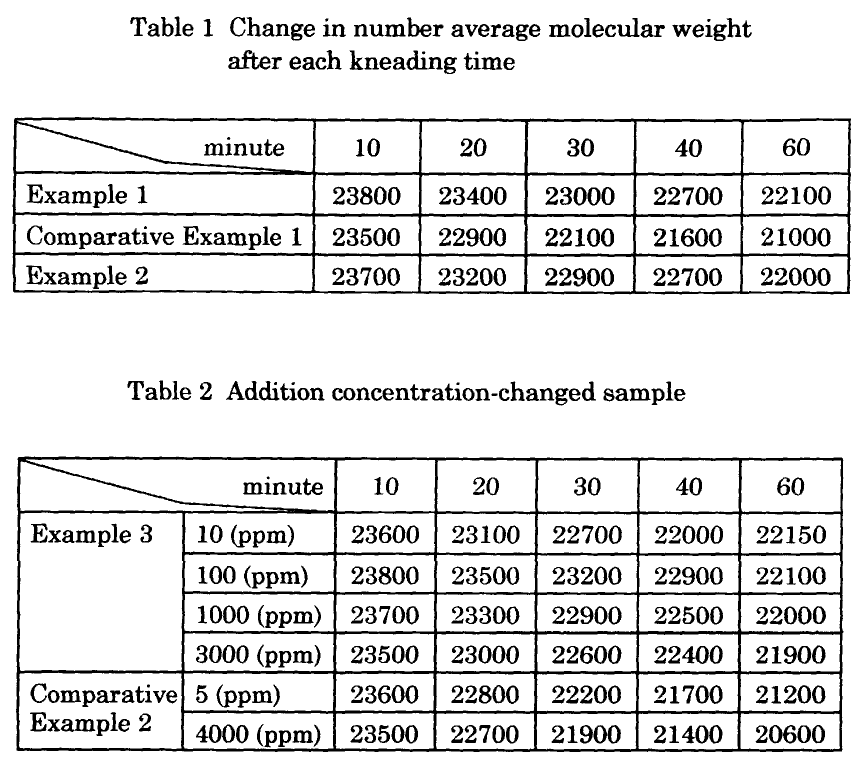

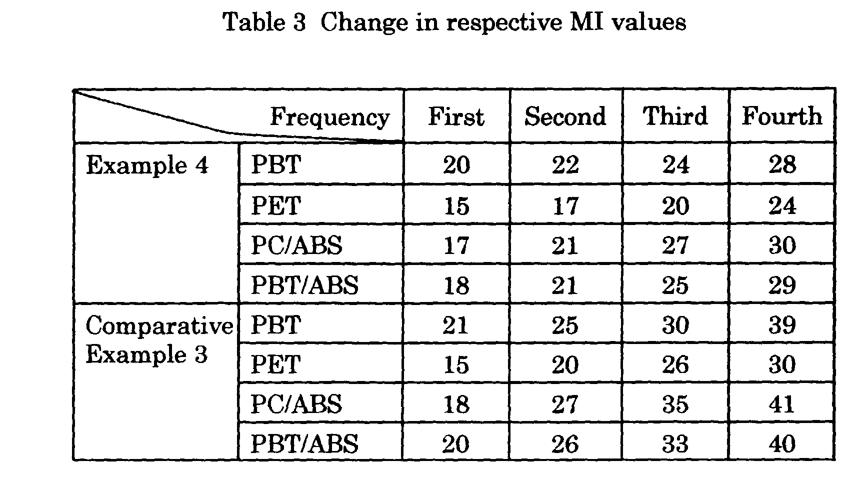

## Claims

1. A heat stabilizing method of a thermoplastic resin characterized by adding 10 to 3000 ppm of tannin to the thermoplastic resin.

2. The heat stabilizing method as described in claim 1, wherein the tannin is China tannin or 3,5,7,3',4'-pentahydroxyflavane.

3. The heat stabilizing method as described in claim 1, wherein the thermoplastic resin is a polycarbonate base resin or a thermoplastic resin containing this polycarbonate base resin.

4. The heat stabilizing method as described in claim 1, wherein the thermoplastic resin is a polyester base resin or a thermoplastic resin containing this polyester base resin.
